# EUROPEAN PATENT APPLICATION

(11) **EP 3 190 537 A1**
(43) Date of publication of application: **12.07.2017**
(21) Application number: 15837589.9
(22) Date of filing: 02.04.2015
(51) Int. Cl.: G06F 21/62

(54) **PROTECTION METHOD AND DEVICE FOR APPLICATION DATA**

(30) Priority: 01.09.2014 CN 201410440445
(71) Applicant: ZTE Corporation, Shenzhen city, Guangdong 518057 (CN)
(72) Inventor: DONG, Zhenjiang, Shenzhen Guangdong 518057 (CN); WANG, Wei, Shenzhen Guangdong 518057 (CN)
(74) Representative: Novagraaf Technologies
(86) International application number: PCT/CN2015/075799
(87) International publication number: WO 2016/033966

(57) **Abstract**

A protection method and device for application data are provided. The method includes: acquiring a data request sent by a monitored application, wherein the data request is used for requesting data in a first data source in which data needing protection is stored (S302); and redirecting the data request from the first data source to a second data source, wherein the second data source is used to store false data of the data needing protection (S304). The protection method and device for application data proposed herein address the problem existing in the related art that the protection of application data can only be achieved by modifying system codes of an Android system and hindering the normal running of an application, and realize the protection of application data without changing system codes or hindering the use of an existing application.

## Description

### Technical Field

The present disclosure relates to the field of communications and in particular to a protection method and device for application data.

### Background

Mobile phones develop rapidly nowadays, with abundant applications installed thereon, mobile phones are capable of meeting demands of users in various aspects, thus, mobile phones have become indispensable for our life, but no longer just a tool for communication. However, just because of the abundant functions, a great amount of user information is stored in a smart phone, making the security of the data stored in a mobile phone become an important research subject. The main operating systems for smart phones currently available on the market include network operating systems, the Iphone Operating System (IOS) developed by Apple Inc, Android and Windows Phone. The openness of Android, on one hand, helps Android win in market share, but on the other hand, makes Android continuously criticized for its poor security. Applications in Android are provided by various sources, including a plenty of secondary markets in addition to Google Play[4]. The lack of effective supervision and management makes it difficult for users to determine whether or not an application conducts a malicious action, causing a severe potential safety hazard to the personal data of a user. Besides, because Android adopts an All-or-northing permission management scheme, the user has no choice but to accept the giving of all required permission to an application or cancel the installation of the application, leading to the leakage of information because many users are forced to give some applications permission involving personal information.

In desktop operating systems, the researches on data security are relatively mature. Among the results of these researches, an mbox[5] of MIT can realize a Linux non-root sandbox operation based on Ptrace[6]. A user can run any operation in a sandbox without applying for root privileges, thus, an operation in a sandbox does not affect an external operating system, and meanwhile, the data of a user is protected from being used improperly by an application in a sandbox, thus protecting the security of the data.

The most famous one of the research results obtained in the Android security field is TaintDroid which introduces a Taint technology into an Android system for the first time. Each variable is added with identifier information by modifying the interpretive execution process of Dalvik VM to realize a variable-based identification for monitoring the use of an infected variable. This approach, although indeed effective in tracking the use of data, forces a user who desires to use this approach to change his/her system to a specific Android system because this approach adopts a method of directly modifying an application framework and is therefore badly lowered in practicability. VetDroid and APPfence deriving from this working principle are further improved in security analysis but still fail to address the problem of the requirement for a specific system.

In relevant arts, an In-vivo Bytecode Instrumentation is provided which protects user information mainly by modifying an original application using static analysis means such as decompiling and repackaging to repackage the application into a new application and adding a permission check in a sentence for the use of user information by the new application to inquire of the user about whether or not to give the application a right for using the user information.

No effective solutions have been proposed to address the problem existing in the related art that the protection of application data can only be achieved by modifying system codes of an Android system and hindering the normal running of an application.

### Summary

A protection method and device for application data are provided herein to at least address the foregoing problem.

In accordance with an embodiment of the present disclosure, a protection method for application data is provided, which includes: acquiring a data request sent by a monitored application, wherein the data request is used for requesting data in a first data source in which data needing protection is stored, and redirecting the data request from the first data source to a second data source, wherein the second data source is used to store false data of the data needing protection.

In the embodiment, the data request may include: a first data request for requesting internal data; or a second data request for requesting external data, wherein the internal data is data stored by the monitored application, and the external data is data of at least one application in an operating system except for the monitored application.

In the embodiment, in a case where the first data request for requesting internal data is acquired, redirecting the data request from the first data source to the second data source may include: modifying, when the operating system calls the monitored application, a specified parameter, which is included in an internal data source to identify the first data source, into a first parameter for indicating the second data source; and redirecting the data request to the second data source according to the parameter for indicating the second data source.

In the embodiment, in a case where the second data request for requesting external data is acquired, redirecting the data request from the first data source to the second data source may include: acquiring a second parameter for identifying a data source from an external data resource; modifying the parameter for identifying the data source to a parameter for indicating the second data source; and redirecting the data request to the second data source according to the parameter for indicating the second data source.

In the embodiment, the second parameter may include: a Uniform Resource Identifier (URI).

In the embodiment, the first data resource corresponds to a plurality of second data sources.

In the embodiment, correspondence of the first data resource to the plurality of second data sources is realized in the following way: when data indicated by a second identifier is queried using a query command, setting a returned value of the query command to be null, wherein an application which receives the returned value does not respond to the returned value if the returned value of the query command is null.

In accordance with another embodiment of the present disclosure, a protection device for application data is provided, which includes: an acquisition module arranged to acquire a data request sent by a monitored application, wherein the data request is used for requesting data in a first data source in which data needing protection is stored, and a redirecting module arranged to redirect the data request from the first data source to a second data source, wherein the second data source is used to store false data of the data needing protection.

In the embodiment, the acquisition module is arranged to acquire the data request sent by the monitored application when the data request at least includes at least one of: a first data request for requesting internal data; or a second data request for requesting external data, wherein the internal data is data stored by the monitored application, and the external data is data of at least one application in an operating system except for the monitored application.

In the embodiment, in a case where the first data request for requesting internal data is acquired, the redirecting module may include: a first modification unit arranged to modify, when the operating system calls the monitored application, a specified parameter, which is included in an internal data source to identify the first data source, into a first parameter for indicating the second data source; and a first redirecting unit arranged to redirect the data request to the second data source according to the parameter for indicating the second data source.

In the embodiment, in a case where the second data request for requesting external data is acquired, the redirecting module may include: an acquisition unit arranged to acquire a second parameter for identifying a data source from an external data resource; a second modification unit arranged to modify the parameter for identifying the data source to a parameter for indicating the second data source; and a second redirecting unit arranged to redirect the data request to the second data source according to the parameter for indicating the second data source.

By redirecting a request for user data from a corresponding target source to another target source, the protection method and device for application data proposed herein address the problem existing in the related art that the protection of application data can only be achieved by modifying system codes of an Android system and hindering the normal running of an application, and realize the protection of application data without changing system codes or hindering the use of an existing application.

### Brief Description of the Drawings

The accompanying drawings described herein which are incorporated in and form a part of the specification are provided for the better understanding of the present disclosure, and exemplary embodiments of the present disclosure, together with the description thereof, serve to explain the present disclosure but are not to be construed as improper limitations to the present disclosure. In the accompanying drawings:
Fig. 1 is a diagram illustrating the execution sequence of a monitoring on the system call of a child thread using ptrace in the related art;
Fig. 2 is a diagram illustrating a thread model used in a protection process for application data according to an embodiment of the present disclosure;
Fig. 3 is a flowchart illustrating a protection method for application data according to an embodiment of the present disclosure;
Fig. 4 shows the information sent by an application for requesting external data according to an embodiment of the present disclosure;
Fig. 5 illustrates a process of extracting the URI of an external data source according to an embodiment of the present disclosure;
Fig. 6 is a diagram illustrating the architecture of a protection system for application data according to an embodiment of the present disclosure;
Fig. 7 is a block diagram illustrating the structure of a protection device for application data according to an embodiment of the present disclosure; and

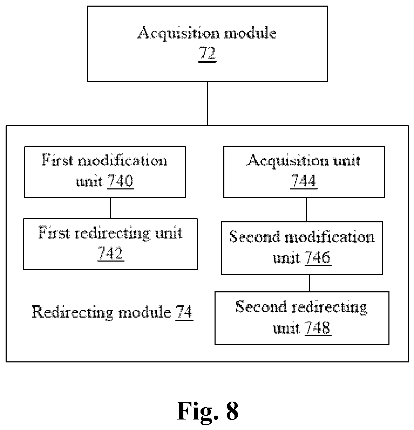

Fig. 8 is a block diagram illustrating another structure of a protection device for application data according to an embodiment of the present disclosure.

### Detailed Description of the Embodiments

The present disclosure will be described below in detail with reference to accompanying drawings when read in conjunction with specific embodiments. It should be noted that the embodiments of the present disclosure and the features thereof can be combined with each other if no conflict is caused.

Additional features and advantages of the present disclosure will be set forth in the description which follows, and in part will be apparent from the description, or maybe learned by practice of the present disclosure.

Additional features and advantages of the present disclosure will be set forth in the description which follows, and in part will be apparent from the description, or maybe learned by practice of the present disclosure. The objectives and other advantages of the present disclosure may be realized and attained by the structure particularly pointed out in the written description and claims thereof as well as the appended drawings.

To make a protection process for application data involved herein understood better, relevant arts are described briefly below.

As a common means for monitoring a running process under a Linux operating system, ptrace provides a monitoring thread with a capability of observing and controlling the execution of a monitored thread, so that the monitoring thread can observe and modify the memory and the register of the monitored thread. Almost the debugging aid in each Linux system is realized by ptrace, including gdb. Apart from functioning as a debugger, another important function of ptrace is to monitor system calls.

In ptrace, a monitoring thread should display a statement on the monitoring on another thread first. Because monitoring is implemented in the unit of a thread, each thread of a process including a plurality of threads can be monitored by a separate thread, meanwhile, it should be appreciated that monitoring a process requires monitoring each thread in the process. However, each thread in Linux is created by a system call, clone, while ptrace provides a function of automatically monitoring a thread cloned by a monitored thread, it is not needed to pay much attention to this problem.

After a thread is monitored, the signal sending of the thread is stopped every time the thread sends a signal. After waitpid, a monitoring program receives a signal sent from the monitored thread and knows why the monitored thread is stopped, then, the monitoring program can realize corresponding functions, for example, acquire the current register of the monitored thread or modify the memory space of the monitored thread, by using various options provided by ptrace. After the monitored thread completes a desired operation, the monitored thread is made to continue to run or run in a single step manner.

Each thread monitored by a monitoring thread is no longer monitored by the monitoring thread after the monitoring thread stops running.

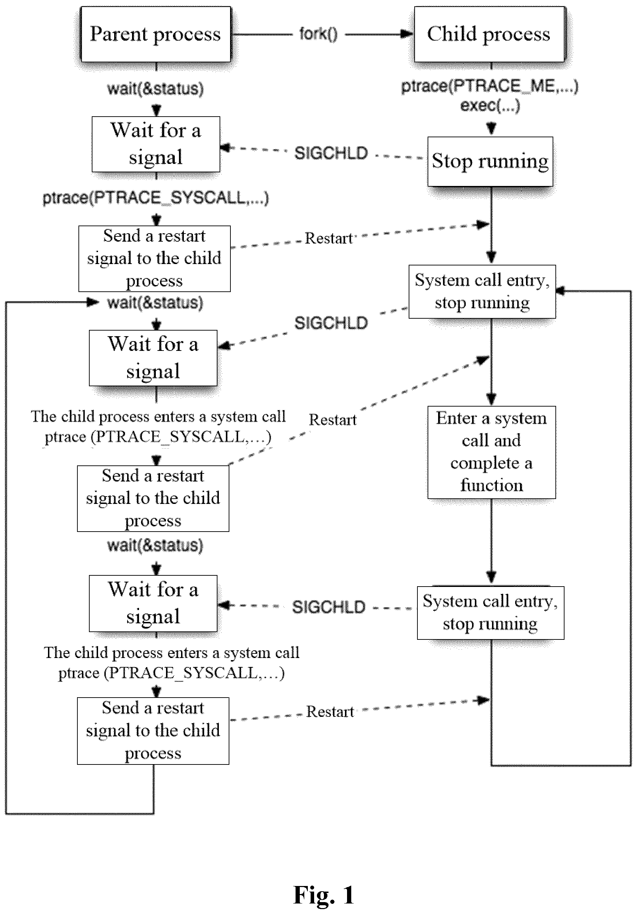

Fig. 1 is a diagram illustrating the execution sequence of a monitoring on the system call of a child thread using ptrace in the related art. After a child thread is monitored by a parent thread, the child thread is stopped by SIGTRAP and sends a SIGCHLD signal to the parent thread every time the child thread enters a system call. The parent thread acquires the SIGCHLD signal through wait, at this time, the child thread is stopped, and the parent thread can acquire the parameters requested by the child thread through a system call or even modify these parameters by means of the functions provided by ptrace. After completing necessary operations, the parent thread causes, using a PTRACE_SYSCALL parameter, the child thread to continue to run. Because of the use of the PTRACE_SYSCALL parameter, the child thread is stopped again and informs the parent thread when the result of the system call is returned. At this time, the parent thread can continue to manipulate the child thread and make the child thread continue to run after completing the manipulation, thereby achieving the monitoring on a system call.

The execution and the data acquisition of a suspicious thread can be controlled by monitoring a system call, this is how a thread is monitored in Linux. Because Android is based on a Linux kernel, this mode can also be introduced into an Android system.

In a Linux operating system, fork and exec are called when a program is started. If ptrace is used, then a program needing monitoring can be forked easily by a monitoring program to realize a monitoring easily, however, the particularity of Android systems eliminates the possibility of this realization mode.

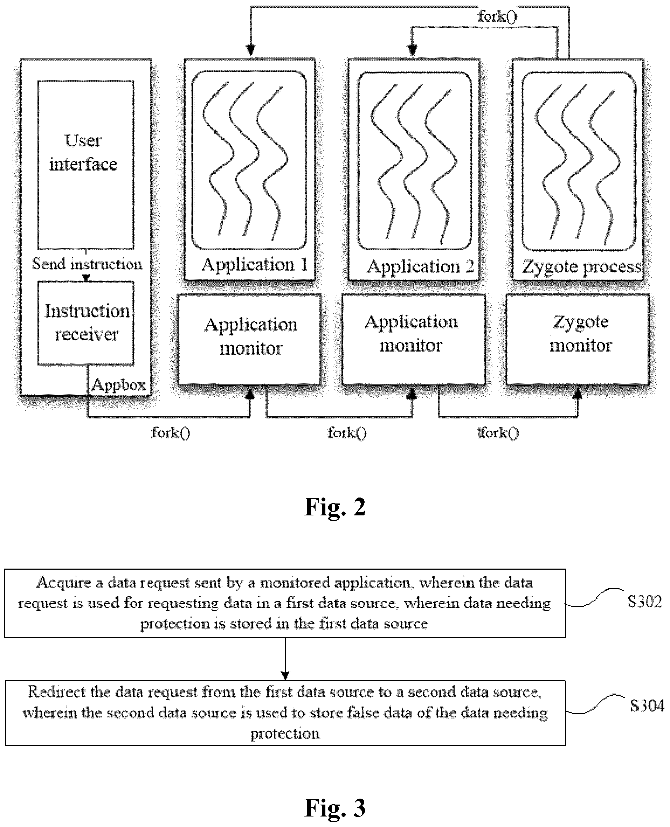

In an Android system, each application process is created by being forked by a zygote process. In order to make an application monitored once the creation of the application starts, each fork instruction of the zygote process should be monitored in advance. Meanwhile, an Android application employs a multi-thread model, that is, an Android application consists of a plurality of threads. In addition to an interface thread, an Android system also supports the creation of a worker thread by an application to deal with some heavy tasks, so as to avoid the jamming of the interface thread. Although a system and some suspicious applications in the system can be monitored using one thread, the performance of the system will be undoubtedly tremendously impaired. Based on this discovery, the thread model shown in Fig. 2 is designed and described in the embodiments of the present disclosure.

A protection method for application data is provided in an embodiment of the present disclosure. Fig. 3 is a flowchart illustrating a protection method for application data according to an embodiment of the present disclosure. As shown in Fig. 3, the method includes the following steps:
S302: acquiring a data request sent by a monitored application, wherein the data request is used for requesting data in a first data source, wherein data needing protection is stored in the first data source; and
S304: redirecting the data request from the first data source to a second data source, wherein the second data source is used to store false data of the data needing protection.

By executing the foregoing steps to redirect request for user data from a corresponding target source to another target source, the application data protecting method addresses the problem existing in the related art that the protection of application data can only be achieved by modifying system codes of an Android system and hindering the normal running of an application, and realizes the protection of application data without changing system codes or hindering the use of an existing application.

In S302, the data request may include: a first data request for requesting internal data; or a second data request for requesting external data, wherein the internal data is data stored by the monitored application, and the external data is data of at least one application in an operating system except for the monitored application.

In a specific implementation process, in a case where the first data request for requesting internal data is acquired, redirecting the data request from the first data source to the second data source may include: modifying, when the operating system calls the monitored application, a specified parameter, which is included in an internal data source to identify the first data source, into a first parameter for indicating the second data source; and redirecting the data request to the second data source according to the parameter for indicating the second data source.

In a specific implementation process, in a case where the second data request for requesting external data is acquired, redirecting the data request from the first data source to the second data source may include: acquiring a second parameter for identifying a data source from an external data resource; and modifying the parameter for identifying the data source to a parameter for indicating the second data source.

In the present embodiment, a deep analysis is made herein on the environment in which the applications on an Android system run. Android realizes Sandbox for all virtual machines in the Runtime layer in order to guarantee the running of each application in a separate environment without being affected by each other or affecting an external system. Thus, the files an application can access are limited to private files in data folders of the application and files in an external memory, and all the other data cannot be acquired by the application without the intervention of the mechanism of IPC. In the embodiment, the sources of user information are divided into internal sources and external sources according to this feature.

The internal data source: the internal data source refers to the storage of data by an application itself, including files, databases, sharing configuration and external files of the application.

The external data source: the external data source refers to the provision of data by an external application, that is, the data obtained after an application sends a request to an external program through the IPC mechanism of Android.

The second parameter may include: a URI. The first data source may correspond to a plurality of second data sources.

Optionally, correspondence of the first data resource to the plurality of second data sources is realized in the following way: when data indicated by a second identifier is queried using a query command, setting a returned value of the query command to be null, wherein an application which receives the returned value does not respond to the returned value if the returned value of the query command is null.

To make the protection process for application data described in the foregoing embodiment understood better, the protection scheme for application data is described below with reference to an exemplary embodiment. It should be appreciated that the exemplary embodiment is not to be construed as limiting the present disclosure.

Internal data source (that is, the internal data described in the foregoing embodiments)

Three steps are mainly executed during the installation process of an Android application: place an apk file under a /data/app directory; decompress and scan an apk package and place the dex (Dalvik bytecodes) file in the apk package in a /data/dalvik-cachhe folder; and create a root directory for storing the data of the application in the /data/dalvik-cachhe folder. All the files, caches and databases that are created by default are stored in a corresponding folder in /data/data/ when the application is running, and the application only has full permission to the files in this folder in an internal memory.

Thus, all the internally stored data of an application is centralized in a corresponding folder of /data/data/, and this folder is a folder needing protection in term of internal storage. If the /data/data/ folder of an application is cleared, then the application runs like a newly installed application including no data.

Besides, an application can also gain permission to access an external memory medium and store the data of the application in the external memory by applying for external storage permission. However, the application may share some files with other applications in this situation, which may lead to the leakage of user data. Moreover, these files are fixedly located, all in a /sdcard directory for example.

Thus, all the internal data sources of an application exist in several specific directories. In order to protect these information, a redirecting method can be used to disenable the access of a real file by a monitored application by changing the access of the real file to an access to an isolated file with the monitored application unaware of the change. To enable a monitored application to be executed correctly with the monitored application unaware of being monitored, it is needed to modify the parameters of the file directories of the monitored application into an isolated folder during entry of a system call of the monitored application, and modify the parameters back to the original path used during the entry of the system call when a result of the system call is successfully returned. In this way, a file system redirecting function completely transparent to the upper layer can be realized.

Then, each system call for which a redirecting function needs to be realized is recognized, and internal data sources are protected by implementing the foregoing procedures one by one.

External data source (that is, the external data described in the foregoing embodiments)

External data refers to the data acquired from a process other than a target application, thus, these data all have a data sourcing process which is called an external data source. An external data source acquires a request of a target application for data and returns data to the target application, thereby completing the transfer of data. This process involves a plurality of Android modules and a relatively complicated interaction of the modules but is not able to be easily modified by virtue of the manners adopted in the processing of an internal data source. The running mechanisms of the IPC and Content Providers of Android should be understood beforehand. Last, to prevent a target application from acquiring user information, a redirecting method is also adopted in the embodiment to redirect a request of the target application for user information to a false external data source with the target application unaware of the redirection. In such a way, the target application cannot acquire the data of a targeted external data source, thereby protecting external data.

Binder is the mechanism of the IPC in an Android system. Because the core element of Binder is Binder drivers, each application desiring to use Binder IPC should open a Binder driver first, that is, starts /dev/binder. Each request in a Binder driver is transferred through the ioctl system call. Each object connected with a Binder driver is identified by a unique handle. As a Binder context manager, Service Manager has a fixed handle 0. When desiring to request data from a server end, an application first sends a request for a service to the Binder context manager having a handle 0. The Service Manager searches a service list for the service and determines whether or not the client has permission to link the service and, if so, returns the handle of the service to the client. After obtaining the handle of the service, the client can send the request to the server end through a Binder driver. Each instruction of Binder is transferred through the ioctl system call, and a plurality of commands are linearly stored into a specific data structure in the instruction. Because the use of the instruction in an upper application is the construction of a transferable data structure through the call of an abstract function in libbinder, what needs to do in the current layer is to analyze the data and extract needed data.

Above Binder, Android provides data for a remote application through a Content Provider. The Content Provider provides a norm call standard for calls of an upper layer, each application should request data from the Content Provider according to this standard. The Content Provider analyzes the request and returns encapsulated data to the application sending the request, thereby completing an external data request process. It can be known from above that the key of the processing of an external data source lies in the analysis of a call interface of the Content Provider. In the Content Provider, five interfaces, that is, query, insert, update, delete and getType, are exposed for an upper layer. The first parameter in each of these requests is a URI which identifies the data in the Content Provider. The URI consists of the whole identification name of the Content Provider and the name of one table in the Content Provider. For example, content://com.android,contacts/people, in which com.android.contacts is the identifier of a Content Provider, and people is the name of a table in the Content Provider. An Android system finds the Content Provider requested by an application through such a URI.

It can be seen from above that the data needed to be extracted from ioctl is the URI. However, because Binder IPC is much used in an Android system, a great number of IPC messages unrelated with data is used in Android system, therefore, it is impractical to analyze and scan these messages one by one. For this sake, where IPC needs to be used in the use of an Android application is analyzed, and the features of messages related to a data request are revealed from the analysis.

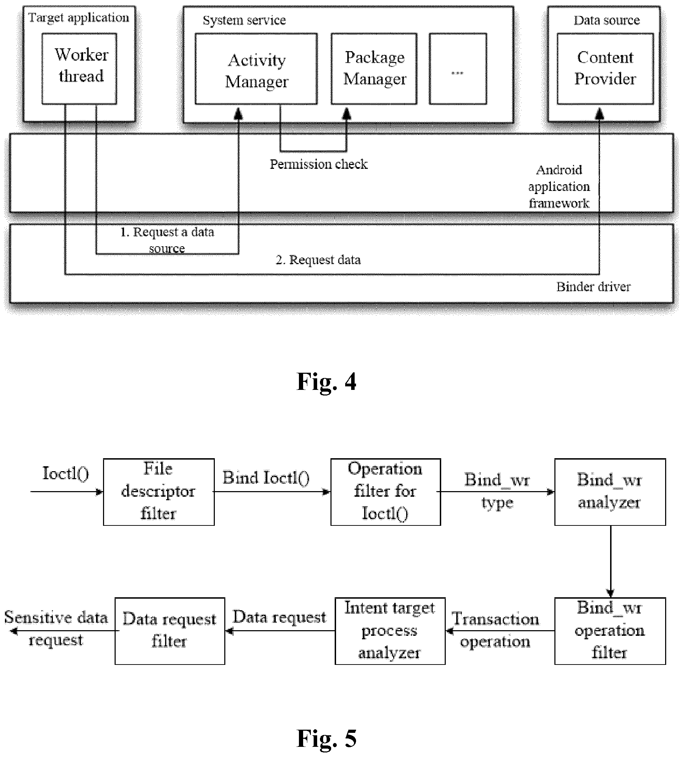

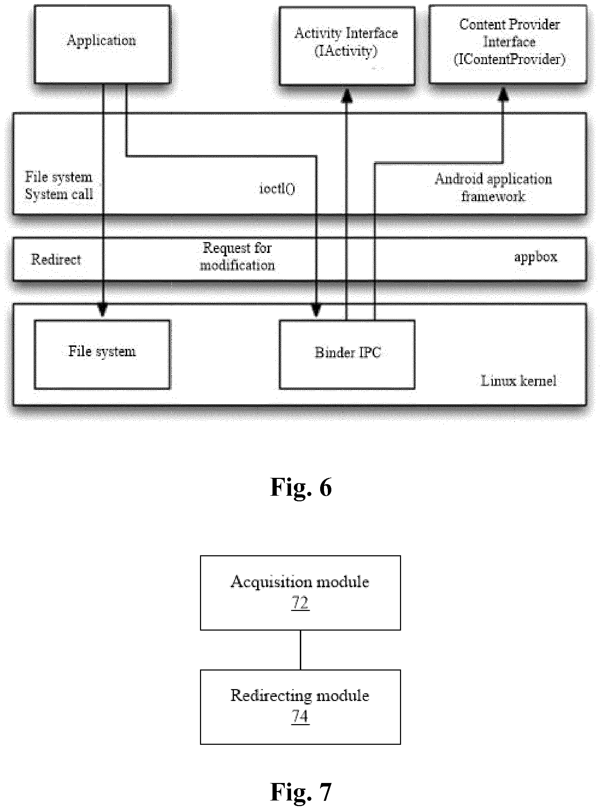

Fig. 4 shows the information sent by an application to request external data. The URI data needed can be found by finding these two pieces of information and analyzing the information. Fig. 5 shows the specific flow of the finding of URI data, and Fig. 6 is a diagram illustrating the architecture of a protection system for application data according to an embodiment of the present disclosure.

After a URI is extracted, the extracted URI is changed to a created false data source.

Because monitoring should be transparent to an upper layer, to make a target application pass the permission check for a false external information source, the permission needed to access the false external information source should be the same as the permission needed to access a real external information source. For example, if the permission needed to read a contact list is android.permission.READ_CONTACTS, then the permission needed to access the Content Provider of false contacts created by the monitoring is also android.permission.READ_CONTACTS. Thus, after being redirected to the false external information source, the monitored application can also pass a permission authority to complete the acquisition of data.

The optimal way to realize a false external information source is to copy all the codes of a real external information source but modify a URI, in this way, the sameness of the false external information source with the real external information source in actions in addition to data is guaranteed, and all unexpected errors are prevented. However, on one hand, real external data sources are structurally huge and each real external data source includes a great number of codes, on the other hand, because user information is closely related with the system, it is difficult to extract and separately compile this portion of user information, making it extremely difficult to realize this mode.

However, according to the analysis above, user information is leaked by being read. As each reading operation conducted in a Content Provider is based on a query command, Actions like 'insert', 'update' and 'delete' need no corresponding implementation process. Moreover, because each query command needs to deal with a situation that the result returned is null, if the returned value of a query is null, then the application receiving such result ignores the specific structure in the result returned. In view of this, a false information source may be corresponding to a plurality of correct information sources, not needing to realize a false information source for each correct information source. By realizing a false external information source merely through the realization of a query instruction and returning a null result no matter what is requested, an external data source can be processed simply.

A protection device for application data is also provided in the embodiment to realize the foregoing embodiments and exemplary embodiments, what has been described above is not described below repeatedly, and the modules involved in the device are described below. The term 'module', as used hereinafter, is the combination of software and/or hardware for realizing preset functions. Although the devices described in the following embodiments are implemented as software preferably, the implementation of the devices as hardware or the combination of software and hardware may also be devised.

Fig. 7 is a block diagram illustrating the structure of a protection device for application data according to an embodiment of the present disclosure. As shown in Fig. 7, the device includes:
an acquisition module 72 arranged to acquire a data request sent by a monitored application, wherein the data request is used for requesting data in a first data source in which data needing protection is stored, and
a redirecting module 74 coupled with the acquisition module 72 and arranged to redirect the data request from the first data source to a second data source, wherein the second data source is used to store false data of the data needing protection.

By redirecting a request for user data from a corresponding target source to another target source through the combined effect of the modules, the application data protecting device addresses the problem existing in the related art that the protection of application data can only be achieved by modifying system codes of an Android system and hindering the normal running of an application, and realizes the protection of application data without changing system codes or hindering the use of an existing application.

Optionally, the acquisition module 72 is arranged to acquire the data request sent by the monitored application when the data request at least includes at least one of: a first data request for requesting internal data; or a second data request for requesting external data, wherein the internal data is data stored by the monitored application, and the external data is data of at least one application in an operating system except for the monitored application.

The improvement of the embodiment with respect to the foregoing technical solution lies in that: in a case where the first data request for requesting internal data is acquired, the redirecting module 74 may include: a first modification unit 740 arranged to modify, when the operating system calls the monitored application, a specified parameter, which is included in an internal data source to identify the first data source, into a first parameter for indicating the second data source; and a first redirecting unit 742 coupled with the first modification unit 740 and arranged to redirect the data request to the second data source according to the parameter for indicating the second data source.

In a case where the second data request for requesting external data is acquired, the redirecting module 74 may include: an acquisition unit 744 arranged to acquire a second parameter for identifying a data source from an external data resource; a second modification unit 746 coupled with the acquisition unit 744 and arranged to modify the parameter for identifying the data source to a parameter for indicating the second data source; and a second redirecting unit 748 coupled with the second modification unit 746 and arranged to redirect the data request to the second data source according to the parameter for indicating the second data source.

In conclusion, the embodiments of the present disclosure address the problem existing in the related art that the protection of application data can only be achieved by modifying system codes of an Android system and hindering the normal running of an application, and realize the protection of application data without changing system codes or hindering the use of an existing application.

Apparently, it should be appreciated by those skilled in the art that each module or step described in the present disclosure can be realized by a universal computer and that the modules or steps may be integrated on a single computer or distributed on a network consisting of a plurality of computers, optionally, the modules or steps may be realized by executable program codes so that the modules or steps can be stored in a memory to be executed by a computer, and in some cases, the steps shown or described herein can be executed in a sequence different from this presented herein, or the modules or steps are formed into integrated circuit modules, or several of the modules or steps are formed into integrated circuit modules. Therefore, the present disclosure is not limited to the combination of specific hardware and software.

Although certain exemplary embodiments of the present disclosure have been described above, it should be appreciated that the exemplary embodiments are not described for limiting the present disclosure and that a variety of modifications and variations can be devised by those of ordinary skill in the art. Any modification, equivalent substitute and improvement that are devised without departing from the principle of the present disclosure shall fall within the scope of protection defined by the appended claims of the present disclosure.

### Industrial Applicability

By redirecting a request for user data from a corresponding target source to another target source, the protection method and device for application data proposed herein address the problem existing in the related art that the protection of application data can only be achieved by modifying system codes of an Android system and hindering the normal running of an application, and realize the protection of application data without changing system codes or hindering the use of an existing application.

## Claims

1. A protection method for application data, comprising:
acquiring a data request sent by a monitored application, wherein the data request is used for requesting data in a first data source in which data needing protection is stored; and
redirecting the data request from the first data source to a second data source, wherein the second data source is used to store false data of the data needing protection.

2. The method as claimed in claim 1, wherein the data request comprises:
a first data request for requesting internal data; or a second data request for requesting external data, wherein the internal data is data stored by the monitored application, and the external data is data of at least one application in an operating system except for the monitored application.

3. The method as claimed in claim 2, wherein in a case where the first data request for requesting internal data is acquired, redirecting the data request from the first data source to the second data source comprises:
modifying, when the operating system calls the monitored application, a specified parameter, which is included in an internal data source to identify the first data source, into a first parameter for indicating the second data source; and
redirecting the data request to the second data source according to the parameter for indicating the second data source.

4. The method as claimed in claim 2, wherein in a case where the second data request for requesting external data is acquired, redirecting the data request from the first data source to the second data source comprises:
acquiring a second parameter for identifying a data source from an external data resource;
modifying the parameter for identifying the data source to a parameter for indicating the second data source; and
redirecting the data request to the second data source according to the parameter for indicating the second data source.

5. The method as claimed in claim 4, wherein the second parameter comprises: a Universal Resource Identifier, URI.

6. The method according to clam 4 or 5, wherein the first data resource corresponds to a plurality of second data sources.

7. The method as claimed in claim 6, wherein correspondence of the first data resource to the plurality of second data sources is realized in the following way:
when data indicated by a second identifier is queried using a query command, setting a returned value of the query command to be null, wherein an application which receives the returned value does not respond to the returned value if the returned value of the query command is null.

8. A protection device for application data, comprising:
an acquisition module arranged to acquire a data request sent by a monitored application, wherein the data request is used for requesting data in a first data source in which data needing protection is stored; and
a redirecting module arranged to redirect the data request from the first data source to a second data source, wherein the second data source is used to store false data of the data needing protection.

9. The device as claimed in claim 8, wherein the acquisition module is arranged to acquire the data request sent by the monitored application when the data request at least comprises at least one of: a first data request for requesting internal data; or a second data request for requesting external data, wherein the internal data is data stored by the monitored application, and the external data is data of at least one application in an operating system except for the monitored application.

10. The device as claimed in claim 9, wherein in a case where the first data request for requesting internal data is acquired, the redirecting module comprises:
a first modification unit arranged to modify, when the operating system calls the monitored application, a specified parameter, which is included in an internal data source to identify the first data source, into a first parameter for indicating the second data source; and
a first redirecting unit arranged to redirect the data request to the second data source according to the parameter for indicating the second data source.

11. The device as claimed in claim 9, wherein in a case where the second data request for requesting external data is acquired, the redirecting module comprises:
an acquisition unit arranged to acquire a second parameter for identifying a data source from an external data resource;
a second modification unit arranged to modify the parameter for identifying the data source to a parameter for indicating the second data source; and
a second redirecting unit arranged to redirect the data request to the second data source according to the parameter for indicating the second data source.
